# FASCICULE DE BREVET EUROPEEN

(11) **EP 4 076 912 B1**
(45) Date de publication et mention de la délivrance du brevet: **31.01.2024**
(21) Numéro de dépôt: 20841970.5
(22) Date de dépôt: 15.12.2020
(51) Int. Cl.: B29C 70/38, B29C 35/08

(54) **TETE D'APPLICATION DE FIBRES AVEC VOLET ESCAMOTABLE**
FASERAPPLIKATIONSKOPF MIT EINZIEHBARER KLAPPE
FIBRE APPLICATION HEAD WITH RETRACTABLE FLAP

(30) Priorité: 19.12.2019 FR 1914574
(43) Date de publication de la demande: 26.10.2022
(73) Titulaire: Coriolis Group, 56530 Quéven (FR)
(72) Inventeur: COUDURIER, Julien, 56100 LORIENT (FR)
(86) Numéro de dépôt international: PCT/FR2020/000275
(87) Numéro de publication internationale: WO 2021/123517

(56) Documents cités:
- WO-A2-2013/072583
- FR-A1- 2 949 378

## Description

La présente invention concerne une tête d'application de fibres pour la réalisation de pièces en matériaux composites, plus particulièrement une tête d'application de fibres avec un volet escamotable, ainsi qu'un procédé de fabrication d'une pièce en matériau composite au moyen d'une telle tête d'application.

Il est connu des machines d'application de fibres pour l'application au contact sur un outillage de drapage d'une ou plusieurs fibres plates continues, de type rubans, sèches ou imprégnées de résine thermodurcissable ou thermoplastique, notamment des fibres de carbone, constituées d'une multitude de fils ou filaments de carbone. Après application de plusieurs plis de fibres superposés, la pièce résultante est soumise à une opération de durcissement, dite de polymérisation, dans le cas de résines thermodurcissables, et dite de consolidation dans le cas de résines thermoplastiques.

Ces machines d'application de fibres, appelées également machines de placement de fibres, comprennent classiquement une tête d'application, un système de déplacement apte à déplacer la tête d'application, et des moyens de stockage pour stocker les fibres. Les moyens de stockage de fibres peuvent être embarqués sur la tête, ou être disposés à distance de la tête. La tête comprend classiquement un système de compactage comprenant au moins rouleau de compactage pour l'application d'une ou plusieurs fibres sur une surface d'application d'un outillage de drapage, des moyens de guidage pour guider la fibre ou les fibres sous la forme d'une bande vers ledit rouleau de compactage, et pour chaque fibre, des moyens de coupe pour couper une fibre, des moyens de réacheminement pour réacheminer la fibre jusqu'au rouleau de compactage après une coupe effectuée par les moyens de coupe, et des moyens de blocage pour bloquer la fibre venant d'être coupée. Le système de compactage comprend en outre au moins un vérin de compactage pour appliquer les fibres avec un effort de compactage.

Pour assurer un bon guidage de la ou des fibres en sortie des moyens de guidage jusqu'au rouleau de compactage, notamment suite à une opération de coupe d'une fibre et/ou de réacheminement de ladite fibre, il a été proposé dans le document brevet WO2013/030467 une tête équipée d'un peigne comprenant une pluralité de languettes ou lamelles flexibles aptes à venir contre la ou lesdites fibres sortant des moyens de guidage pour mettre la ou lesdites fibres en appui contre le rouleau de compactage. Dans le cas d'une bande formée de plusieurs fibres, une telle languette flexible garantit un bon maintien des fibres les unes par rapport aux autres, sensiblement bord à bord, et évite une déviation latérale des fibres notamment lors de trajectoires courbes de la tête sur le moule.

Il a également été proposé dans le document brevet FR2949378 une tête de drapage d'une fibre ou bande équipée d'un peigne ou volet escamotable à lamelles souples déplaçable entre une position active dans laquelle ledit volet est apte à venir par sa portion distale contre la bande sortant des moyens de guidage pour mettre la bande en appui contre le rouleau de compactage, et une position escamotée dans laquelle ledit volet est à distance du rouleau de compactage. Le déplacement du volet entre ses deux positions est obtenu par un mouvement de rotation, l'angle de dégagement défini entre la surface d'application et le volet étant plus important dans la position active que dans la position escamotée.

De manière similaire, le document brevet US2008/0302483 décrit une tête d'application de fibres pour l'application d'une bande de plusieurs fibres, un doigt ou volet escamotable étant prévu pour chaque fibre, chaque doigt étant également déplaçable par un mouvement de rotation entre une position active et une position escamotée dans laquelle le doigt est plus proche de la surface de drapage.

Par ailleurs, suivant le type de fibres déposées, notamment dans le cas de fibres sèches munies d'un liant thermoplastique ou de fibres pré-imprégnées d'une résine thermoplastique, il est nécessaire d'équiper la tête d'un système de chauffe apte à émettre un rayonnement thermique en direction de la zone de pincement entre le rouleau de compactage et la surface d'application. Pour assurer une bonne liaison de la fibre au substrat, le système de chauffe doit de préférence chauffer chaque fibre avant son compactage par ce dernier, ainsi que la surface d'application et/ou une ou plusieurs fibres préalablement appliquées. Les volets équipant les têtes pour guider la ou les fibres ou plus près du rouleau ne permettent pas une chauffe optimale des fibres avant leur compactage par le rouleau.

Le but de la présente invention est de proposer une tête d'application de fibres permettant à la fois de bien guider les fibres sur le rouleau tout en garantissant un chauffage efficace pour le drapage de fibres.

A cet effet, la présente invention a pour objet une tête d'application de fibres pour la réalisation de pièces en matériau composite comprenant un système de compactage comprenant au moins un rouleau de compactage pour l'application d'au moins une fibre sur la surface d'application d'un moule, des moyens de guidage pour guider au moins une fibre vers ledit rouleau de compactage, et un volet escamotable déplaçable par des moyens d'actionnement entre une position active dans laquelle ledit volet escamotable est apte à venir par son extrémité distale contre la fibre sortant des moyens de guidage pour mettre ladite fibre en appui contre le rouleau de compactage, et une position escamotée dans laquelle ledit volet escamotable est à distance du rouleau de compactage, caractérisée en ce qu'elle comprend un système de chauffe apte à émettre un rayonnement thermique en direction de la zone de pincement entre le rouleau de compactage et la surface d'application, pour chauffer la fibre sortant des moyens de guidage avant son compactage par le rouleau, ainsi que la surface d'application et/ou une ou plusieurs fibres préalablement appliquées, ledit volet escamotable étant déplaçable par des moyens d'actionnement entre sa position active et sa position escamotée de sorte que le rouleau de compactage soit soumis au rayonnement du système de chauffe sur une surface plus importante dans la position escamotée que dans la position active du volet escamotable.

Selon l'invention, le volet dans sa position escamotée laisse davantage passer le rayonnement du système de chauffe que dans sa position active. La surface cylindrique du rouleau est exposée au rayonnement émis par le système de chauffe sur un angle qui est plus important lorsque que le volet est en position escamotée que lorsque le volet est en position active. Ainsi, la fibre sortant des moyens de guidage est exposée au rayonnement du système de chauffe avant son compactage par le rouleau de compactage sur une longueur de fibre qui est plus importante lorsque le volet est en position escamotée que lorsque le volet est en position active. Le volet est avantageusement déplacé dans sa position active pour guider la fibre au plus près du rouleau lors du réacheminement de la fibre et/ou lors d'une opération de coupe de la fibre. Le volet selon l'invention peut ainsi être utilisé en position active pour un meilleur guidage de la fibre vers le rouleau lorsque le guidage de la fibre est le plus critique, par exemple en début ou en fin de drapage d'une fibre, ou lors de trajectoires présentant une courbure importante. En cours de drapage, lorsque la fibre est compactée par le rouleau, le guidage de la fibre est moins critique, et le volet en position escamotée permet alors une chauffe efficace de la fibre sortant des moyens de guidage et permet ainsi d'obtenir une bonne liaison des fibres, notamment à des vitesses de drapage élevées.

Selon un mode de réalisation, le volet escamotable est déplaçable par un mouvement de translation entre sa position active et sa position escamotée, lesdits moyens d'actionnement comprenant de préférence au moins un vérin, ledit volet étant par exemple, assemblé par sa partie proximale à l'extrémité de la tige de vérin.

Selon un mode de réalisation, le volet escamotable dans sa position active est élastiquement en appui par son extrémité distale contre le rouleau de compactage, avec ou en l'absence de fibre intercalée entre le rouleau et l'extrémité distale.

Selon un mode de réalisation, la tête est prévue pour l'application au contact sur un outillage d'une seule fibre plate, par exemple sous la forme d'un large ruban, par exemple de plus de deux pouces de largeur. Dans ce cas, la tête comprend des moyens de guidage aptes à guider une seule fibre plate en direction du rouleau, et un ou plusieurs volet escamotable associé au rouleau de compactage, par exemple un seul volet escamotable déplacé entre ses deux positions par un ou deux vérins.

Selon un autre mode de réalisation, la tête est une tête dite de placement de fibres pour l'application au contact sur un outillage de plusieurs fibres plates continues, sous la forme d'une bande, chaque fibre ayant exemple une largeur de 1/8, 1/4, 1/2, 1, 1,5 ou 2 pouces. Dans ce cas, lesdits moyens de guidage sont aptes à guider une pluralité de fibres sur un rouleau de compactage sous la forme d'une bande, de préférence dans laquelle les fibres sont disposées sensiblement bord à bord. La tête comprend alors un ou plusieurs volets escamotables associés au rouleau de compactage, par exemple un seul volet escamotable pour toutes les fibres, le volet étant par exemple déplacé entre ses deux positions par un ou deux vérins. Ladite tête comprend avantageusement des moyens de coupe pour couper, de préférence individuellement, chaque fibre en amont du rouleau par rapport au sens de défilement des fibres, et des moyens de réacheminement, disposés en amont des moyens de coupe, pour réacheminer chaque fibre venant d'être coupée afin de pouvoir à tout moment stopper et reprendre l'application d'une fibre, ainsi que choisir la largeur de la bande. Avantageusement, la tête comprend en outre des moyens de blocage, disposés en amont des moyens de coupe, aptes à bloquer, de préférence individuellement, chaque fibre venant d'être coupée.

Selon un mode de réalisation, pour la réalisation de pièces en matériau composite par application de fibres continues, de préférence disposées bord à bord sous la forme d'une bande, ladite tête est apte à appliquer plusieurs fibres au moyen d'un système de compactage comprenant plusieurs rouleaux de compactage et des vérins de compactage,
- pour chaque fibre, la tête comprend un module fonctionnel comprenant des moyens de coupe et des moyens de réacheminement, chaque module fonctionnel est monté mobile en translation selon une direction de compactage sur un élément support de la tête,
- chaque rouleau de compactage est monté sur un ou plusieurs modules fonctionnels adjacents et un vérin de compactage est associé au(x) module(s) fonctionnel(s) associé(s) à un rouleau de compactage pour le déplacement en translation du ou des modules fonctionnels,
- la tête comprenant un système de chauffe indépendant associé à chaque rouleau de compactage, ledit système de chauffe étant apte à se déplacer avec le ou les modules fonctionnels associés audit rouleau de compactage, et au moins un volet escamotable associé à au moins un rouleau de compactage, un volet est par exemple associé à chaque rouleau de compactage.

Selon un mode de réalisation, la tête comprend un rouleau de compactage par module fonctionnel.

Selon un mode de réalisation, les rouleaux de compactage sont disposés en une seule rangée, côte à côte sans contact entre eux, les axes de rotation des rouleaux de compactage étant disposés selon un même plan de compactage, parallèle à la direction de compactage.

Selon un mode de réalisation, chaque premier module fonctionnel comprend des moyens de guidage aptes à guider une première fibre en direction du rouleau de compactage selon un premier plan de guidage formant un premier angle non nul avec le plan de compactage des axes de rotation des rouleaux de compactage, chaque second module fonctionnel comprend des moyens de guidage aptes à guider une deuxième fibre en direction du rouleau de compactage selon un second plan de guidage formant un deuxième angle non nul avec le plan de compactage, ledit deuxième angle étant supérieur au premier angle, lesdits plans de guidage étant disposés du même côté du plan de compactage, en amont dudit plan de compactage par rapport à la direction d'avancement de la tête.

Selon un mode de réalisation, la tête comprend un volet escamotable associé à chaque premier module fonctionnel. Selon un autre mode de réalisation, la tête comprend un volet escamotable associé à chaque module fonctionnel.

Selon un mode de réalisation, chaque système de chauffe comprend un système de chauffe de type laser, ou un système de chauffe de type lampe flash.

Pour garantir un compactage sensiblement uniforme sur toute la largeur de la bande, chaque rouleau de compactage est avantageusement apte à s'adapter à la surface d'application, notamment à des surfaces d'application convexes et/ou concaves. Selon un mode de réalisation, la tête comprend un ou plusieurs rouleaux souples, chacun réalisé en un matériau dit souple, déformable élastiquement, par exemple en matériau élastomère, de manière à pouvoir se déformer en épousant le profil desdites surfaces. Selon un autre mode de réalisation, chaque rouleau est un rouleau rigide segmenté, par exemple métallique, comprenant plusieurs segments de rouleau indépendants montés côte à côte sur une même tige axiale, chaque segment étant déplaçable sur ladite tige axiale, perpendiculairement à cette dernière, de manière indépendante, et étant sollicité élastiquement contre la surface d'application par des moyens élastiques, tels que des systèmes à poche expansible.

La présente invention a également pour objet un procédé de fabrication d'une pièce en matériau composite comprenant l'application de fibres continues sur une surface d'application, caractérisé en ce que l'application de fibres est réalisée au moyen d'une tête d'application de fibres telle que décrite précédemment, par déplacement relatif de la tête d'application par rapport à la surface de drapage selon des trajectoires de dépose, le volet escamotable associé à une fibre étant déplacé en position active au moins lors d'une opération de réacheminement de la fibre et/ou de la coupe de la fibre, de préférence au moins lors d'une opération de réacheminement de la fibre, et ramené en position escamotée lorsque l'extrémité de la fibre réacheminée n'est plus compactée par le rouleau de compactage, de manière à obtenir une chauffe de ladite fibre avant son compactage par le rouleau de compactage sur une longueur de fibre plus importante.

Le volet pourra aussi avantageusement être déplacé ponctuellement en position active sur des tronçons de trajectoire présentant une courbure importante pour éviter un déplacement latéral de fibres pouvant entrainer des chevauchement ou écartements entre deux fibres adjacentes et éviter ainsi une altération des propriétés mécaniques de la pièce finale.

L'invention sera mieux comprise, et d'autres buts, détails, caractéristiques et avantages apparaîtront plus clairement au cours de la description explicative détaillée qui va suivre d'un mode de réalisation particulier actuellement préféré de l'invention, en référence aux dessins schématiques annexés, sur lesquels :
- Fig 1 est une vue schématique de côté d'une tête d'application de fibres selon un mode de réalisation l'invention ;
- Fig 2 est une vue partielle agrandie de la figure 1 illustrant le volet escamotable et son système d'actionnement à proximité du rouleau de compactage, le volet étant en position escamotée ;
- Fig 3 est une vue analogue à celle de la figure 2 avec une vue en coupe partielle au niveau du système d'actionnement du volet ;
- Fig 4 est une vue analogue à celle de la figure 3, le volet escamotable étant en position active ; et
- Fig 5 est une vue en perspective du volet escamotable et de son système d'actionnement, sans le capot de protection.

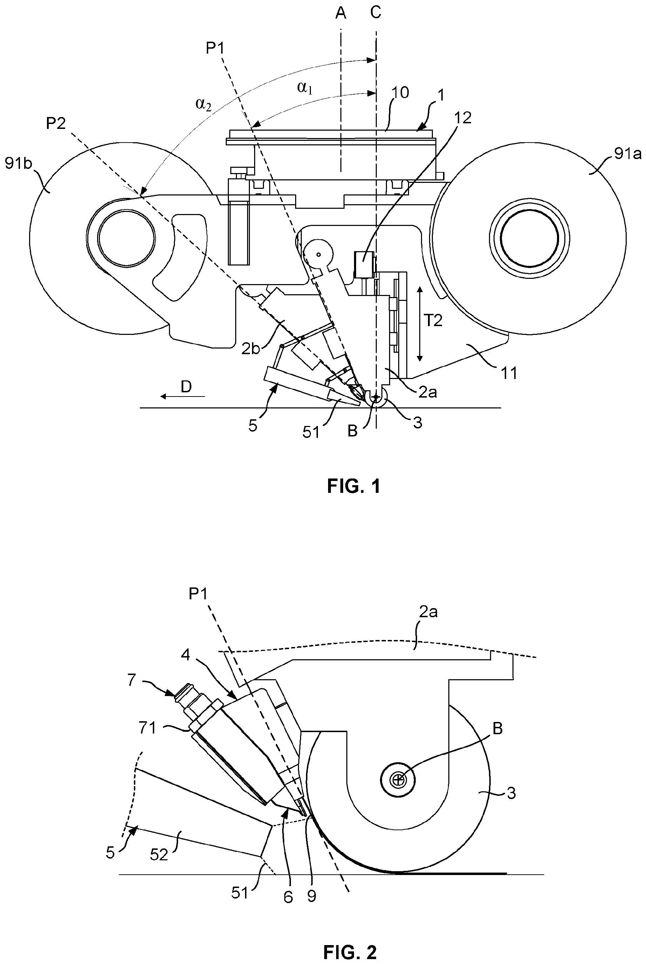

La figure 1 illustre une tête 1 d'application de fibres selon l'invention pour le drapage de plusieurs fibres continues disposées bord à bord sous la forme d'une bande. Dans le présent mode de réalisation, la tête comprend un rouleau de compactage indépendant par fibre. La tête 1 est destinée à être assemblée à un système de déplacement pour effectuer les opérations de drapage de fibres, les fibres étant dans le présent mode de réalisation conditionnées sous forme de cassettes, et les cassettes sont embarquées sur la tête. La tête comprend une structure support ou châssis 10 muni de moyens d'assemblage (non représentés) pour l'assemblage de la tête selon un axe assemblage A, à un système de déplacement de la tête, par exemple le poignet d'un robot poly-articulé ou d'un système de déplacement cartésien de type portique.

La tête porte une pluralité de modules fonctionnels 2a, 2b disposés côte à côte. Chaque module fonctionnel est associé à une cassette de fibre 91a, 91b et comprend des moyens de coupe, des moyens de réacheminement, des moyens de blocage et un rouleau de compactage 3.

La tête comprend deux types de module fonctionnel, des premiers modules fonctionnels 2a, appelés également modules fonctionnels aval, associés à des cassettes de fibres aval 91a, disposées en aval des modules fonctionnels par rapport à la direction d'avancement D de la tête lors du drapage, et des seconds modules fonctionnels 2b, appelés également modules fonctionnels amont, associés à des cassettes de fibres amont 91b, disposées en amont des modules fonctionnels par rapport à la direction d'avancement D. Les modules fonctionnels sont disposés selon une rangée, la rangée comprenant une alternance de modules fonctionnels aval 2a et de modules fonctionnels amont 2b.

Le montage des modules fonctionnels sur le châssis est réalisé au moyen d'éléments support 11, chaque élément support portant un module fonctionnel aval 2a et un module fonctionnel amont 2b. Chaque module fonctionnel est monté de manière indépendante sur l'élément support, mobile en translation dans une direction T2 de compactage, qui est parallèle à l'axe d'assemblage A, et est assemblé en partie supérieure à l'extrémité de la tige d'un vérin de compactage 12, ledit vérin étant assemblé par son corps à l'élément support.

Le rouleau de compactage 3 est monté entre deux flasques du module fonctionnel, mobile en rotation autour d'un axe de rotation B, qui est perpendiculaire à la direction T2. Lors du déplacement d'un module fonctionnel en translation dans la direction T2, l'axe de rotation B de son rouleau de compactage se déplace dans un plan C, appelé plan de compactage, qui est parallèle à la direction T2. Les éléments support sont montés sur le châssis de sorte que les axes de rotation des rouleaux soient tous disposés sensiblement selon le même plan C.

Chaque module fonctionnel aval comprend des moyens de guidage d'une fibre permettant de guider la fibre entrant dans le module en direction du rouleau de compactage selon un plan P1, ledit plan formant un angle α₁ avec le plan C. Chaque module fonctionnel amont comprend des moyens de guidage d'une fibre permettant de guider la fibre entrant dans le module en direction du rouleau de compactage selon un plan P2, les plans P1 et P2 étant disposés du même côté du plan C, ledit plan P2 formant un angle α₂ avec le plan C qui est supérieur à l'angle α₁. Les plans P1 et P2 sont disposés en amont du plan C par rapport à la direction d'avancement de la tête lors du drapage, le plan P2 étant disposé en amont un plan P1.

Chaque module fonctionnel comprend des moyens de coupe pour couper la fibre, des moyens de réacheminement, pour réacheminer la fibre jusqu'au rouleau de compactage après une opération de coupe, et des moyens de blocage pour bloquer la fibre venant d'être coupée, de tels moyens étant connus en soi. A titre d'exemple, le module fonctionnel aval comprend des moyens de coupe et des moyens de blocage, tels que décrits dans le document brevet EP2134532, WO2017/072421 ou FR17/01245 et FR17/01247.

Les moyens de guidage permettent de guider la fibre 9 entre les moyens de blocage, les moyens de réacheminement et les moyens de coupe, et en direction du rouleau de compactage. Pour guider la fibre des moyens de blocage jusqu'au moyens de coupe, les moyens de guidage comprennent un premier système de guidage (non représenté) comprenant par exemple un canal, formé à l'interface d'assemblage de deux plaques. Pour guider la fibre entre les moyens de coupe et le rouleau, les moyens de guidage comprennent par exemple, tel qu'illustré aux figures 2 à 4, un second système de guidage 4 comprenant un canal 41 formé à l'interface d'assemblage de deux plaques, dont une première plaque intérieure 42 et une seconde plaque extérieure 43. Ce second système de guidage est par exemple monté sur la chape de montage du rouleau de compactage, par sa plaque intérieure 42.

Les rouleaux de compactage sont tous identiques et sont de préférence aptes à s'adapter à la surface d'application, notamment à des surfaces d'application convexes et/ou concaves. Chaque rouleau de compactage est de préférence un rouleau de compactage en un matériau dit souple, qui est déformable élastiquement, tel qu'un élastomère. Le rouleau comprend un cylindre en matériau souple, monté fixe en rotation sur un axe rigide, par exemple métallique par lequel le rouleau est monté libre en rotation entre deux flasques.

Chaque vérin de compactage 12 est apte à déplacer son module fonctionnel associé entre une position haute extrême et une position basse extrême. Pour le drapage d'une fibre avec un module fonctionnel, le module est sollicité élastiquement vers sa position extrême basse par son vérin de compactage. La tête est amenée en contact avec la surface de drapage, le rouleau en appui avec la surface de drapage. L'effort de compactage pour le drapage peut être régulé en adaptant la pression d'alimentation en air comprimé dans la chambre supérieure du vérin. Lors du drapage, le module fonctionnel peut se déplacer entre sa position basse extrême et sa position haute extrême pour s'adapter à la surface de drapage. Lorsque le module n'est pas utilisé pour draper une fibre, celuici est maintenu en position haute extrême en alimentant la chambre inférieure en air comprimé. Dans un souci de simplification, le rouleau de compactage est illustré avec une forme cylindrique sur les figures 2 à 4. En pratique le rouleau de compactage en matériau souple se déforme sous l'effet de l'effort de compactage et présente une forme écrasée.

La tête comprend un système de chauffe 5, associé à chaque module fonctionnel, dont le rayonnement 51 est dirigé obliquement vers la zone de pincement ou zone de contact entre le rouleau de compactage et la surface d'application, pour chauffer la fibre à draper, avant son compactage par ce dernier, ainsi que la surface d'application et/ou une ou plusieurs fibres préalablement appliquées pour chauffer la surface d'application en amont du rouleau. Dans le présent mode de réalisation, chaque module porte un système de chauffe 5, en amont du rouleau par rapport à la direction d'avancement de la tête. Chaque système de chauffe comprend par exemple une lampe flash, tel que décrit dans le document brevet WO2014/029969 ou WO2017/134453, comprenant une optique formée d'un quartz 52 pour guider le rayonnement. Le montage de la lampe est effectué de sorte que le rayonnement principal de la lampe soit dirigé en direction de la zone de pincement entre le rouleau et la surface d'application.

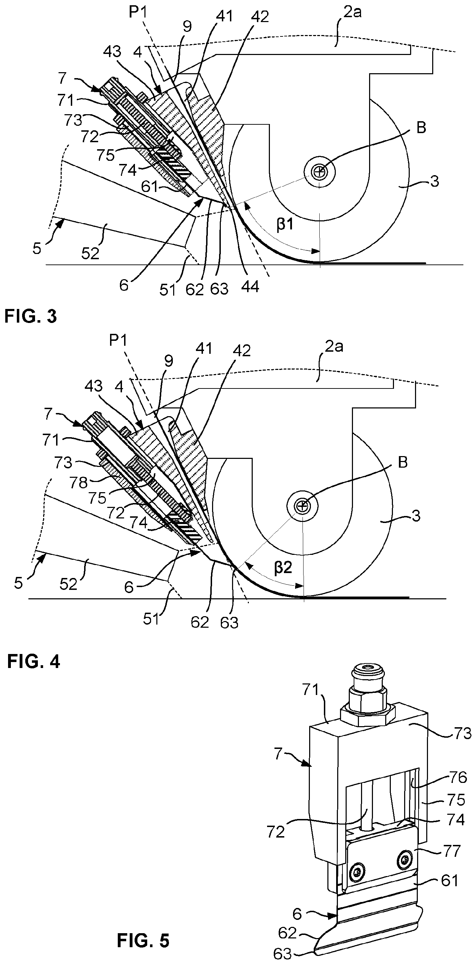

Selon l'invention, les modules fonctionnels aval sont équipés chacun d'un volet escamotable 6 apte à être déplacé par un système d'actionnement 7 entre deux positions. En référence aux figures 3 à 5, le volet est formé d'une plaque métallique flexible montée à l'extrémité de la tige 72 d'un vérin 71 du système d'actionnement 7. Le vérin est monté par son corps 73 sur le second système de guidage 4, en particulier sur sa deuxième plaque extérieure 43. Pour le montage du volet, la tige est équipée en extrémité d'un coulisseau 74 dont les bords latéraux sont aptes à coulisser dans deux gorges 76 de deux plaques de guidage 75 s'étendant depuis sur le corps 73 du vérin parallèlement à la tige. Le volet est monté par sa partie proximale 71 à plat sur le coulisseau au moyen d'une contre-plaque 77. La partie proximale est placée entre le coulisseau et la contre-plaque, et est fixée au moyen de vis, passant dans des trous de la contre-plaque et des trous de la partie proximale, et vissées dans des trous taraudés du coulisseau. Un capot de protection 78 est monté sur le corps pour recouvrir la tige.

Le volet 6 comprend une partie proximale 61 plane se prolongeant par une partie distale 62 plane inclinée en direction du rouleau, formant par exemple un angle de 10 à 35°par rapport à la partie proximale, cette partie distale se terminant par une extrémité distale 63 recourbée par laquelle le volet est à venir en contact, à plat, contre le rouleau.

Le vérin 71 est apte à être piloté pour déplacer le volet en translation entre une position escamotée et une position active. Le vérin est par exemple un vérin pneumatique à simple effet, qui est alimenté en air comprimé pour déplacer le volet en position active, un ressort (non représenté) assurant le retour en position escamotée.

Dans sa position escamotée, le volet est à distance du rouleau de compactage, son extrémité distale 63 est disposée en retrait ou au niveau de l'extrémité distale 44 du second système de guidage, contre la surface extérieure de la plaque extérieure, tel qu'illustré à la figure 3. Dans sa position active, le volet est en contact par son extrémité distale contre la surface extérieure du rouleau. Le volet vient de préférence sensiblement tangentiellement et élastiquement en appui par son extrémité distale contre la surface du rouleau. Le volet présente, au moins au niveau de sa partie distale une largeur sensiblement égale à la largeur du rouleau. En position escamotée, la surface du rouleau recevant le rayonnement s'étend du système de guidage, plus précisément de l'extrémité distale 44 de la plaque extérieure, jusqu'à la zone de pincement entre le rouleau et la surface de drapage, cette surface de rouleau correspondant à l'angle β1 sur la figure 3.

Dans la position active, la surface du rouleau recevant le rayonnement est réduite, celle-ci s'étendant de l'extrémité distale du volet à la zone de pincement. Cette surface de rouleau correspondant à l'angle β2 sur la figure 4, qui est inférieur à l'angle β1 précité. Tel qu'indiqué précédemment, en pratique le rouleau présente une forme écrasée, non cylindrique, les angles β1 et β2 sont en pratique inférieurs à ceux illustrés.

Le volet est avantageusement amené en position active lors du réacheminement de fibre, pour plaquer la fibre contre le rouleau. Les modules fonctionnels aval présentent un plan de guidage P1 dont l'angle α₁ est faible, et de ce fait, sont plus sensibles aux problématiques de réacheminement de fibre. En l'absence de volet, la fibre en sortie du système de guidage a tendance à suivre le plan de guidage P1 et à venir taper sur la surface de drapage avant de passer sous le rouleau. Selon un mode de réalisation, seuls les modules aval sont chacun équipés d'un volet escamotable. Lors de leur réacheminement, le volet permet d'orienter la fibre contre le rouleau en direction de la zone de pincement, de sorte que l'extrémité de la fibre soit pincée et compactée par le rouleau. Dès que l'extrémité de la fibre n'est plus compactée par le rouleau de compactage, le volet peut être ramené dans sa position escamotée, de sorte que la fibre sortant du système de guidage soit davantage chauffée par le rayonnement, et que le drapage puisse être ainsi être effectué à des vitesses élevées. Le vérin 71 peut être piloté par son propre système de vanne pneumatique. Dans un souci d'encombrement, le vérin peut être piloté par le même système de vanne que celui utilisé pour les moyens de réacheminement de la fibre.

Lors de la coupe d'une fibre par les moyens de coupe du module fonctionnel, l'extrémité de la fibre coupée en sortant du système de guidage peut avoir tendance à venir contre le système de chauffe, en particulier le guide d'onde formée par le quartz 52, notamment dans le cas de fibres présentant une certaine rigidité, ce qui peut entrainer un encrassement du quartz et donc une détérioration de la qualité de chauffe. Avantageusement, le volet est amené en position active au moment de la coupe d'une fibre, de sorte que l'extrémité de la fibre soit plaquée par le volet contre le rouleau.

Selon un mode de réalisation, les modules aval et amont sont chacun équipé d'un volet escamotable tel que décrit précédemment.

Selon d'autres modes de réalisation, le système de chauffe à lampe flash précité est remplacé par un système de chauffe de type laser.

Les fibres sont de préférence des fibres continues plates, de type mèches, pré-imprégnées d'une résine thermodurcissable ou d'une résine thermoplastiques, ou des fibres sèches munies d'un liant. Le liant est sous forme de poudre et/ou d'un ou plusieurs voiles, de préférence de type thermoplastique.

La tête peut être adaptée pour le drapage de fibres de différentes largeurs, mais s'avère particulièrement avantageuse pour le drapage de fibres de largeur d'au moins un demi pouce, par exemple d'un pouce, d'un pouce et demi, ou deux pouces. Pour une largeur allant jusqu'à un demi pouce, les fibres peuvent être enroulées en bobines trancannées, à spires hélicoïdales. Au-delà d'un demi-pouce de largeur, la fibre est enroulée en bobine ou cassette sans trancannage.

Selon un autre mode de réalisation, le volet escamotable selon l'invention est monté sur une tête comprenant un seul rouleau de compactage et équipé d'un système de guidage permettant de guider plusieurs fibres vers le rouleau sous la forme d'une bande de fibres dans laquelle les fibres sont disposées bord à bord. Dans ce cas, la tête comprend un volet présentant avantageusement une pluralité de languettes flexibles, telle que décrit dans le document brevet WO2013/030467 précité, chaque languette étant apte à venir appuyer sur la face d'une fibre opposée au rouleau pour plaquer ladite fibre contre le rouleau.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention, telle que définie par les revendications.

## Revendications

1. Tête (1) d'application de fibres pour la réalisation de pièces en matériau composite comprenant
- un système de compactage comprenant au moins un rouleau de compactage (3),
- des moyens de guidage (4) pour guider au moins une fibre (9) vers ledit rouleau de compactage, et
- un volet escamotable (6) déplaçable par des moyens d'actionnement (7) entre une position active dans laquelle ledit volet escamotable est apte à venir par son extrémité distale (63) contre la fibre sortant des moyens de guidage pour mettre ladite fibre en appui contre le rouleau de compactage, et une position escamotée dans laquelle ledit volet escamotable est à distance du rouleau de compactage,
**caractérisée en ce qu'**elle comprend
- un système de chauffe (5) apte à émettre un rayonnement thermique (51) en direction de la zone de pincement entre le rouleau de compactage (3) et la surface d'application, pour chauffer la fibre sortant des moyens de guidage, ainsi que la surface d'application et/ou une ou plusieurs fibres préalablement appliquées,
- ledit volet escamotable (6) étant déplaçable par des moyens d'actionnement entre sa position active et sa position escamotée de sorte que le rouleau de compactage (3) soit soumis au rayonnement (51) du système de chauffe (5) sur une surface plus importante dans la position escamotée que dans la position active du volet escamotable.

2. Tête d'application selon la revendication 1, **caractérisée en ce que** le volet escamotable (6) est déplaçable par un mouvement de translation entre sa position active et sa position escamotée, lesdits moyens d'actionnement (7) comprenant au moins un vérin.

3. Tête d'application selon la revendication 1 ou 2, **caractérisée en ce que** le volet escamotable (6) dans sa position active est élastiquement en appui par son extrémité distale (63) contre le rouleau de compactage (3).

4. Tête d'application selon l'une des revendications 1 à 3, **caractérisée en ce que** lesdits moyens de guidage (4) sont aptes à guider une pluralité de fibres sur un rouleau de compactage sous la forme d'une bande, la tête comprenant un ou plusieurs volets escamotables associés au rouleau de compactage.

5. Tête d'application de fibre selon l'une des revendications 1 à 3, **caractérisée en ce que** ladite tête est apte à appliquer plusieurs fibres au moyen d'un système de compactage comprenant plusieurs rouleaux de compactage indépendants (3) et des vérins de compactage,
- pour chaque fibre, la tête comprend un module fonctionnel (2a, 2b) comprenant des moyens de coupe et des moyens de réacheminement, chaque module fonctionnel est monté mobile en translation selon une direction de compactage (T2) sur un élément support (10) de la tête,
- chaque rouleau de compactage est monté sur un ou plusieurs modules fonctionnels adjacents et un vérin de compactage est associé au(x) module(s) fonctionnel(s) associé(s) à un rouleau de compactage,
- la tête comprenant un système de chauffe (5) indépendant associé à chaque rouleau de compactage (3), et au moins un volet escamotable (6) associé à au moins un rouleau de compactage.

6. Tête d'application de fibres selon la revendication 5, **caractérisée en ce qu'**elle comprend un rouleau de compactage (3) par module fonctionnel (2a, 2b).

7. Tête d'application selon la revendication 5 ou 6, **caractérisée en ce que** les rouleaux de compactage (3) sont disposés en une seule rangée, côte à côte sans contact entre eux, les axes de rotation (B) des rouleaux de compactage étant disposés selon un même plan (C) de compactage, parallèle à la direction de compactage, chaque premier module fonctionnel (2a) comprend des moyens de guidage aptes à guider une première fibre en direction du rouleau de compactage (3) selon un premier plan (P1) de guidage formant un premier angle (α1) non nul avec le plan (C) de compactage des axes de rotation (B) des rouleaux de compactage, chaque second module fonctionnel (2b) comprend des moyens de guidage aptes à guider une deuxième fibre en direction du rouleau de compactage selon un second plan (P2) de guidage formant un deuxième angle (α2) non nul avec le plan (C) de compactage, ledit deuxième angle étant supérieur au premier angle, lesdits plans de guidage (P1, P2) étant disposés du même côté du plan (C) de compactage.

8. Tête d'application selon les revendications 6 et 7 prises en combinaison, **caractérisée en ce qu'**elle comprend un volet escamotable (6) associé à chaque premier module fonctionnel (2a).

9. Tête d'application de fibre selon l'une des revendications 1 à 8, **caractérisée en ce que** chaque système de chauffe (5) comprend un système de chauffe de type laser, ou un système de chauffe de type lampe flash.

10. Procédé de fabrication d'une pièce en matériau composite comprenant l'application de fibres continues sur une surface d'application, ladite application de fibres étant réalisée au moyen d'une tête d'application de fibres selon l'une des revendications 1 à 9, par déplacement relatif de la tête d'application par rapport à la surface de drapage selon des trajectoires de dépose, le volet escamotable (6) associé à une fibre étant déplacé en position active au moins lors d'une opération de réacheminement de la fibre et/ou de la coupe de la fibre, et ramené en position escamotée lorsque l'extrémité de la fibre réacheminée n'est plus compactée par le rouleau de compactage, de manière à obtenir une chauffe de ladite fibre avant son compactage par le rouleau de compactage sur une longueur de fibre plus importante.

## Patentansprüche

1. Faserapplikationskopf (1) zur Herstellung von Teilen aus Verbundmaterial, umfassend
- ein Verdichtungssystem, welches mindestens eine Verdichtungswalze (3) umfasst,
- Führungsmittel (4) zum Führen mindestens einer Faser (9) zur Verdichtungswalze, und
- eine einziehbare Klappe (6), die durch Betätigungsmittel (7) zwischen einer aktiven Position, in der die einziehbare Klappe imstande ist, mit ihrem distalen Ende (63) an die Faser zu gelangen, die aus den Führungsmitteln austritt, um die Faser auf Anschlag gegen die Verdichtungswalze zu bringen, und einer eingezogenen Position beweglich ist, in der sich die einziehbare Klappe im Abstand zu der Verdichtungswalze befindet,
**dadurch gekennzeichnet, dass** er umfasst
- ein Heizsystem (5), das imstande ist, Wärmestrahlung (51) in Richtung des Klemmbereichs zwischen der Verdichtungswalze (3) und der Applikationsoberfläche auszugeben, um die Faser, die aus den Führungsmitteln austritt, sowie die Applikationsoberfläche und/oder eine oder mehrere zuvor applizierte Fasern zu erwärmen,
- wobei die einziehbare Klappe (6) durch Betätigungsmittel zwischen ihrer aktiven Position und ihrer eingezogenen Position beweglich ist, sodass die Verdichtungswalze (3) der Strahlung (51) des Heizsystems (5) auf einer größeren Oberfläche in der eingezogenen Position unterliegt, als in der aktiven Position der einziehbaren Klappe.

2. Applikationskopf nach Anspruch 1, **dadurch gekennzeichnet, dass** die einziehbare Klappe (6) durch eine Vorschubbewegung zwischen ihrer aktiven Position und ihrer eingezogenen Position beweglich ist, wobei die Betätigungsmittel (7) mindestens einen Zylinder umfassen.

3. Applikationskopf nach Anspruch 1 oder 2, **dadurch gekennzeichnet, dass** die einziehbare Klappe (6) in ihrer aktiven Position mit ihrem distalen Ende (63) elastisch an der Verdichtungswalze (3) aufliegt.

4. Applikationskopf nach einem der Ansprüche 1 bis 3, **dadurch gekennzeichnet, dass** die Führungsmittel (4) imstande sind, eine Vielzahl von Fasern auf einer Verdichtungswalze in der Form eines Bandes zu führen, wobei der Kopf eine oder mehrere einziehbare Klappen umfasst, die der Verdichtungswalze zugeordnet sind.

5. Faserapplikationskopf nach einem der Ansprüche 1 bis 3, **dadurch gekennzeichnet, dass** der Kopf imstande ist, mehrere Fasern anhand eines Verdichtungssystems zu applizieren, das mehrere unabhängige Verdichtungswalzen (3) und Verdichtungszylinder umfasst
- der Kopf für jede Faser ein Funktionsmodul (2a, 2b) umfasst, umfassend Schneidmittel und Umleitungsmittel, wobei jedes Funktionsmodul montiert ist, um in einer Verdichtungsrichtung (T2) auf einem Trägerelement (10) des Kopfes vorschubbeweglich zu sein,
- jede Verdichtungswalze auf einem oder mehreren benachbarten Funktionsmodulen montiert ist, und ein Verdichtungszylinder dem (den) Funktionsmodul(en), das (die) einer Verdichtungswalze zugeordnet ist (sind), zugeordnet ist,
- wobei der Kopf ein unabhängiges Heizsystem (5) umfasst, das jeder Verdichtungswalze (3) zugeordnet ist, und mindestens eine einziehbare Klappe (6), die mindestens einer Verdichtungswalze zugeordnet ist.

6. Faserapplikationskopf nach Anspruch 5, **dadurch gekennzeichnet, dass** er eine Verdichtungswalze (3) je Funktionsmodul (2a, 2b) umfasst.

7. Applikationskopf nach Anspruch 5 oder 6, **dadurch gekennzeichnet, dass** die Verdichtungswalzen (3) in einer einzigen Reihe, Seite an Seite ohne Kontakt zueinander angeordnet sind, wobei die Drehachsen (B) der Verdichtungswalze entlang einer selben Verdichtungsebene (C), parallel zur Verdichtungsrichtung angeordnet sind, jedes erste Funktionsmodul (2a) Führungsmittel umfasst, die imstande sind, eine erste Faser entlang einer ersten Führungsebene (P1) die einen ersten Winkel (α1) ungleich null mit der Verdichtungsebene (C) der Drehachse (B) der Verdichtungswalzen bildet, zur Verdichtungswalze (3) zu führen, jedes zweite Funktionsmodul (2b) Führungsmittel umfasst, die imstande sind, eine zweite Faser entlang einer zweiten Führungsebene (P2), die einen zweiten Winkel (α2) ungleich null mit der Verdichtungsebene (C) bildet, wobei der zweite Winkel größer als der erste Winkel ist, zur Verdichtungswalze zu führen, wobei die Führungsebenen (P1, P2) auf derselben Seite der Verdichtungsebene (C) angeordnet sind.

8. Applikationskopf nach den Ansprüchen 6 und 7, in Kombination angenommen, **dadurch gekennzeichnet, dass** er eine einziehbare Klappe (6) umfasst, die jedem ersten Funktionsmodul (2a) zugeordnet ist.

9. Faserapplikationskopf nach einem der Ansprüche 1 bis 8, **dadurch gekennzeichnet, dass** jedes Heizsystem (5) ein Laser-Heizsystem, oder ein Blitzlampen-Heizsystem umfasst.

10. Verfahren zur Herstellung eines Teils aus Verbundmaterial, welches die Applikation von fortlaufenden Fasern auf eine Applikationsoberfläche umfasst, wobei die Applikation von Fasern anhand eines Faserapplikationskopfes nach einem der Ansprüche 1 bis 9, durch eine relative Bewegung des Applikationskopfes in Bezug auf die Aufliegeoberfläche gemäß Abscheidungsbahnen durchgeführt wird, wobei die einziehbare Klappe (6), die einer Faser zugeordnet ist, mindestens während eines Faserumleitvorgangs und/oder eines Faserschneidvorgangs in die aktive Position bewegt wird, und in die eingezogene Position zurückgeführt wird, wenn das Ende der umgeleiteten Faser von der Verdichtungswalze nicht mehr verdichtet wird, um eine Erwärmung der Faser vor deren Verdichtung durch die Verdichtungswalze über eine größere Faserlänge zu erhalten.

## Claims

1. Fibre application head (1) for the production of composite material parts comprising
- a compaction system comprising at least one compaction roller (3)
- guiding means (4) for guiding at least one fibre (9) towards said compaction roller, and
- a retractable flap (6) displaceable by actuation means (7) between an active position in which said retractable flap is able to come by its distal end (63) against the fibre exiting from the guiding means in order to bring said fibre in abutment against the compaction roller, and a retracted position in which said retractable flap is spaced apart from the compaction roller,
**characterized in that** it comprises
- a heating system (5) able to emit thermal radiation (51) towards the nip zone between the compaction roller (3) and the application surface, in order to heat the fibre exiting from the guiding means, as well as the application surface and/or one or more fibres previously applied,
- said retractable flap (6) being displaceable by actuation means between its active position and its retracted position so that the compaction roller (3) is subjected to the radiation (51) of the heating system (5) over a greater surface area in the retracted position than in the active position of the retractable flap.

2. Application head according to claim 1, **characterized in that** the retractable flap (6) is displaceable by a translational movement between its active position and its retracted position, said actuation means (7) comprising at least one cylinder.

3. Application head according to claim 1 or 2, **characterized in that** the retractable flap (6) in its active position is elastically in abutment with its distal end (63) against the compaction roller (3).

4. Application head according to one of claims 1 to 3, **characterized in that** said guiding means (4) are able to guide a plurality of fibres onto a compaction roller in the form of a band, the head comprising one or more retractable flaps associated with the compaction roller.

5. Fibre application head according to one of the claims 1 to 3, **characterized in that** said head is able to apply several fibres by means of a compaction system comprising several independent compaction rollers (3) and compaction cylinders
- for each fibre, the head comprises a functional module (2a, 2b) comprising cutting means and rerouting means, each functional module is mounted so as to be mobile in translation in a compaction direction (T2) on a support element (10) of the head,
- each compaction roller is mounted on one or more adjacent functional modules and a compaction cylinder is associated with the functional module(s) associated with a compaction roller
- the head comprising an independent heating system (5) associated with each compaction roller (3), and at least one retractable flap (6) associated with at least one compaction roller.

6. Fibre application head according to claim 5, **characterized in that** it comprises one compaction roller (3) per functional module (2a, 2b).

7. Application head according to claim 5 or 6, **characterized in that** the compaction rollers (3) are arranged in a single row, side by side without any contact between them, the rotation axis (B) of the compaction rollers being arranged according to a same compaction plane (C), parallel to the compaction direction, each first functional module (2a) comprises guiding means able to guide a first fibre towards the compaction roller (3) along a first guiding plane (P1) forming a first non-zero angle (α1) with the compaction plane (C) of the rotation axis (B) of the compaction rollers, each second functional module (2b) comprises guiding means able to guide a second fibre towards the compaction roller along a second guiding plane (P2) forming a second non-zero angle (α2) with the compaction plane (C), said second angle being greater than the first angle, said guiding planes (P1, P2) being arranged on the same side of the compaction plane (C).

8. Application head according to claims 6 and 7 taken in combination, **characterized in that** it comprises a retractable flap (6) associated with each first functional module (2a).

9. Fibre application head according to any of claims 1 to 8, **characterized in that** each heating system (5) comprises a laser type heating system, or a flash lamp type heating system.

10. Method for manufacturing a composite material part comprising the application of continuous fibres onto an application surface, said application of fibres being performed by means of a fibre application head according to one of claims 1 to 9, by relative displacement of the application head with respect to the lay-up surface according to deposition trajectories, the retractable flap (6) associated with a fibre being displaced into the active position at least during a fibre rerouting operation and/or fibre cutting operation, and returned to the retracted position when the end of the rerouted fibre is no longer compacted by the compaction roller, so as to heat said fibre before it is compacted by the compaction roller over a greater length of fibre.
